(19) **Europäisches Patentamt**
**European Patent Office**
**Office européen des brevets**

(11) **EP 2 059 364 B2**

(12) **NOUVEAU FASCICULE DE BREVET EUROPEEN**
Après la procédure d'opposition

(45) Date de publication et mention de la décision concernant l'opposition:
**16.08.2017 Bulletin 2017/33**

(45) Mention de la délivrance du brevet:
**28.11.2012 Bulletin 2012/48**

(21) Numéro de dépôt: **07787843.7**

(22) Date de dépôt: **24.07.2007**

(51) Int Cl.:
*B23K 1/00* (2006.01)   *B23K 1/20* (2006.01)
*F28D 1/053* (2006.01)   *F28F 1/10* (2006.01)
*F28F 1/02* (2006.01)

(86) Numéro de dépôt international:
**PCT/EP2007/057600**

(87) Numéro de publication internationale:
**WO 2008/025616 (06.03.2008 Gazette 2008/10)**

(54) **PROCEDE DE BRASAGE AVEC APPLICATION DE FLUX DE BRASAGE SUR UN COTE D' UNE TRANCHE D'UN TUBE PLAT POUR UN ECHANGEUR DE CHALEUR**

LÖTVERFAHREN MIT AUFBRINGEN VON LÖTFLUSSMITTEL AUF EINER SEITE EINES ABSCHNITTS EINES FLACHROHRS FÜR EINEN WÄRMETAUSCHER

BRAZING METHOD WITH APPLICATION OF BRAZING FLUX ON ONE SIDE OF A SECTION OF A FLAT TUBE FOR A HEAT EXCHANGER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.08.2006 FR 0607553**

(43) Date de publication de la demande:
**20.05.2009 Bulletin 2009/21**

(73) Titulaire: **Valeo Systèmes Thermiques
78321 Le Mesnil Saint Denis Cedex (FR)**

(72) Inventeur: **BERGES, Damien
72330 Yvré-le-Pôlin (FR)**

(74) Mandataire: **Metz, Gaëlle et al
Valeo Systèmes Thermiques
8, rue Louis Lormand
CS 80517 La Verrière
78322 Le Mesnil Saint Denis Cedex (FR)**

(56) Documents cités:
WO-A-02/24390    WO-A-2006/041210
JP-A- 2003 181 629    JP-A- 2004 347 314
US-A- 5 174 490    US-A- 5 544 698
US-B1- 6 234 243

**Description**

La présente invention concerne un procédé de brasage de tubes plats conformément au préambule de la revendication 1 (voir, par exemple, US 5544698).

L'invention trouve une application particulièrement avantageuse dans le domaine des systèmes d'échange de chaleur dans les véhicules automobiles, notamment les radiateurs de refroidissement des moteurs et les évaporateurs de climatisation.

On connaît aujourd'hui des échangeurs de chaleur pour véhicules automobiles constitués par un faisceau de tubes disposés parallèlement sur une ou parfois plusieurs rangées, ces tubes étant destinés à la circulation à travers l'échangeur d'un fluide caloporteur, tel que de l'eau additionnée de glycol dans le cas des radiateurs de refroidissement de moteurs. Dans cet exemple, le liquide en refroidissant les organes du moteur s'échauffe et doit à son tour être refroidi. C'est le rôle du radiateur d'assurer cette fonction. A cet effet, le liquide à refroidir est mis en circulation dans les tubes du radiateur et se refroidit par échange thermique avec de l'air frais, l'échange thermique étant réalisé par l'intermédiaire d'éléments d'échange de chaleur disposés dans le faisceau de tubes.

Une autre technologie d'assemblage est le brasage des tubes, généralement plats, sur des éléments d'échange de chaleur constitués dans ce cas par des intercalaires placés entre les tubes. Le plus souvent, ces intercalaires sont réalisés sous forme de surface ondulée et sont brasés sur les grandes faces des tubes au niveau des sommets des ondulations.

Les tubes plats utilisés dans cette technique d'assemblage sont obtenus par pliage, extrusion ou électro-soudage.

Dans ce type d'échangeurs à assemblage par brasage, les composants à braser, tubes ou intercalaires, sont réalisés dans un matériau de base, ou matériau d'âme, qui est généralement un alliage d'aluminium choisi dans les séries notées 1xxx, 3xxx, 6xxx ou 7xxx et dont la température de fusion est comprise entre 630 et 660°C.

Pour les tubes pliés ou électro-soudés, le matériau d'âme est recouvert, sur une ou les deux grandes faces des tubes, d'un métal d'apport (« clad » ou « filler metal » en anglo-saxon) en un alliage d'aluminium de la série 4xxx dont la température de fusion est au-dessus de 577°C et inférieure à la température de fusion du métal de l'âme. Ce métal d'apport constitue la couche de brasage proprement dite. Pour les tubes extrudés, le matériau d'apport est déposé sur les intercalaires et non sur les tubes. Cette différence est sans importance pour l'invention qui s'applique de la même manière à toutes les techniques de fabrication des tubes.

Dans son principe, le procédé de brasage d'un échangeur de chaleur consiste à assembler les différentes pièces qui le constitue, puis, après divers traitement, notamment de séchage, à introduire l'ensemble dans un four de brasage auquel on applique une rampe de température de manière à atteindre le point de fusion de la couche de brasage.

Afin d'éviter la formation d'alumine, le brasage est réalisé sous une atmosphère inerte d'azote dans un four dit CAB (« Controlled Atmosphere Brazing »).

Cependant, il a été établi que pour obtenir un échangeur de chaleur de bonne qualité parfaitement étanche, il y a avantage à appliquer sur le matériau d'apport une couche complémentaire appelée flux de brasage.

Le matériau de base constituant le flux de brasage est un fluorure mixte de potassium et d'aluminium ($K_2AlF_5$, $KAlF_4$ ou $K_3AlF_6$). Sa température de fusion est inférieure à la température minimale de fusion du métal d'apport. L'intérêt de ce flux de brasage est multiple.

Lors de la montée en température de l'échangeur au sein du four CAB, le flux de brasage fond en premier et dissout l'alumine naturelle présente sur les pièces de l'échangeur.

Ensuite, le flux de brasage après dissolution de l'alumine permet d'augmenter la mouillabilité de l'aluminium, ce qui prépare la surface des pièces à braser en facilitant les mouvements du matériau d'apport qui, à l'état fondu, remplit les jeux d'assemblage par capillarité. On obtient ainsi un échangeur parfaitement étanche.

Enfin, le flux de brasage empêche la réoxydation des pièces durant le brasage lui-même.

Une méthode connue pour déposer le flux de brasage est de recouvrir d'un mélange de flux et d'eau toutes les pièces de l'échangeur après assemblage, ou éventuellement avant, par immersion dans un bain, aspersion, enduction ou au pinceau. Cette méthode a pour principaux inconvénients, d'une part, une consommation excessive de flux de brasage car seule une faible partie de la surface totale recouverte de flux est réellement utile, environ 5%, et, d'autre part, l'obligation de sécher parfaitement les pièces avant brasage afin d'éviter l'oxydation de l'aluminium par l'eau contenue dans le mélange déposé. Il est alors nécessaire de procéder à une opération de soufflage de manière à chasser une partie de l'eau présente dans l'échangeur, notamment là où elle peut être facilement retenue, comme à l'intérieur des ondulations des intercalaires.

On connaît de l'état de la technique d'autres méthodes pour appliquer le flux de brasage.

La demande de brevet japonais n° 2000061629 décrit un procédé consistant à déposer un cordon de flux aux sommets des intercalaires. Ce procédé pose toutefois des problèmes mécaniques d'assemblage dus aux surépaisseurs introduites par le cordon de flux. Il en résulte une introduction des intercalaires entre les tubes plus difficile et une compression plus élevée à appliquer pour réaliser la cote finale de l'échangeur.

Le procédé divulgué dans la demande de brevet britannique n° 2 334 531 consiste à enduire de flux les grandes faces de tubes plats extrudés. Cependant, la quantité de flux de brasage à utiliser reste encore très importante.

Enfin, la demande de brevet japonais n° 2004025297 suggère de s'affranchir complètement de flux de brasage par la mise en oeuvre de matériaux d'âme et d'apport contenant du magnésium dans des proportions bien déterminées. Ces matériaux ont toutefois l'inconvénient de nécessiter des technologies de four à haute maîtrise de l'atmosphère (ppm $O_2$<10).

Aussi, l'invention a pour but de proposer un procédé de brasage de tubes plats de circulation d'un fluide caloporteur et d'intercalaires de circulation d'air destiné à échanger de la chaleur avec ledit fluide caloporteur dans un échangeur de chaleur, qui permettrait de réduire de manière très significative la quantité de flux de brasage à déposer et d'éviter l'opération de soufflage, sans induire pour autant des inconvénients mécaniques à l'assemblage et tout en utilisant des matériaux standards peu coûteux.

Un procédé de basage de tubes plats conformément à l'invention, est défini dans la revendication 1.

Ainsi, on comprend que lors de la montée en température du four CAB le flux de brasage fond et se répand par gravité sur les grandes faces des tubes et donc dans les zones de contact avec les intercalaires. Comme on le verra en détail plus loin, la densité de flux déposé le long des tubes peut être calculée en tenant compte de la hauteur des tubes, ce qui permet d'ajuster la quantité de flux à utiliser au strict minimum nécessaire.

On notera que les tubes et intercalaires mis en oeuvre dans l'invention peuvent être réalisés avec des matériaux standards, tels que les alliages d'aluminium mentionnés plus haut.

De plus, l'emplacement de la couche de brasage dans une région des tubes située sur une face externe de l'échangeur, n'a aucun effet mécanique néfaste au niveau de l'assemblage contrairement à certains procédés connus.

Selon un mode de réalisation, ladite couche de flux de brasage est déposée sur lesdits tubes sous forme d'un cordon continu ou discontinu. Par exemple, ledit dépôt est réalisé au moyen d'une seringue, d'une valve de dosage, d'un rouleau tramé ou non, d'un pinceau, par micropulvérisation.

Selon un autre mode de réalisation, ladite couche de flux de brasage est déposée sur lesdits tubes par sérigraphie.

Dans tous les cas, l'invention n'exige pas d'utiliser le flux de brasage en solution aqueuse, avec pour conséquence avantageuse que l'étape de soufflage, pourtant indispensable dans les procédés connus, peut ici être évitée.

Il faut également souligner que la couche de flux de brasage peut être indifféremment déposée sur un côté ou sur l'autre de la tranche des tubes, l'invention prévoyant en effet que ladite couche de flux de brasage est déposée sur le côté externe de la tranche des tubes plats, lesdits intercalaires étant disposés à l'extérieur desdits tubes, ou que ladite couche de flux de brasage est déposée sur le côté interne de la tranche des tubes plats, lesdits intercalaires étant disposés à l'intérieur desdits tubes.

L'invention présente en outre bien d'autres avantages.

Dans le cas d'intercalaires à persiennes, il n'y a aucun risque d'obturation des persiennes par des résidus de flux recristallisés après brasage.

L'invention peut être mise en oeuvre sur des surfaces non dégraissées, contrairement aux procédés utilisant du flux en solution aqueuse qui nécessitent un dégraissage préalable.

La description qui va suivre en regard des dessins annexés, donnés à titre d'exemples non limitatifs, fera bien comprendre en quoi consiste l'invention et comment elle peut être réalisée.

La figure 1 est une vue partielle de côté d'un échangeur de chaleur.
La figure 2 est une vue en perspective d'un tube plat de l'échangeur de chaleur de la figure 1 comportant une couche de flux de brasage.
La figure 3 est une vue de face du tube de la figure 2.
La figure 4 est une vue de détail de la tranche du tube de la figure 3.

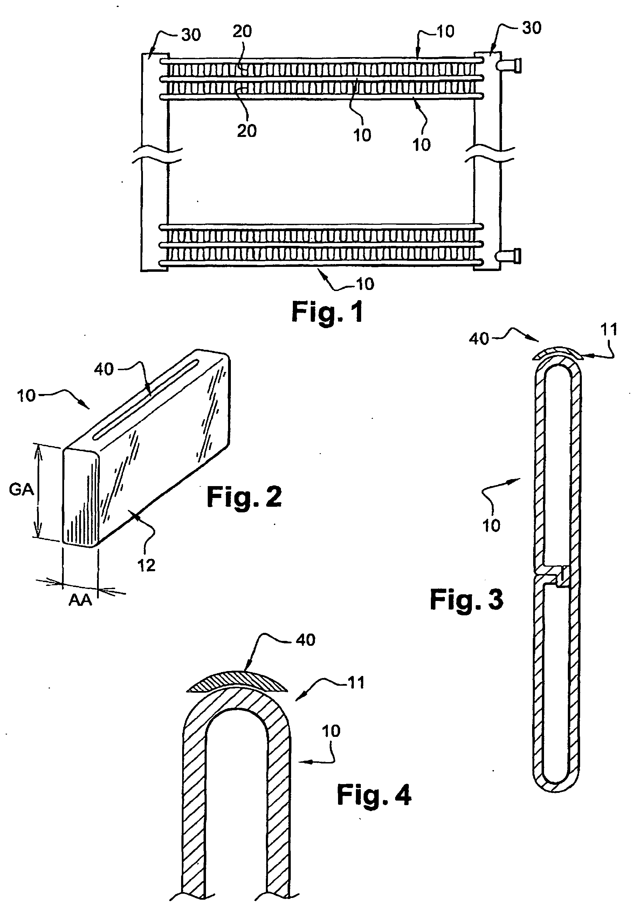

Sur la figure 1 est représenté un échangeur de chaleur comprenant des tubes plats 10 réalisés par pliage, extrusion ou électro-soudage, disposés parallèlement entre eux par leurs grandes faces planes 12 et séparés par des intercalaires 20 ondulés, les sommets de ondulations étant en contact avec les grandes faces des tubes 10.

Les tubes plats 10 comportent, conformément à l'invention, deux grandes faces planes ou grands cotés 12 et deux tranches ou petits cotés 11.

Dans le cas d'un radiateur, l'eau glycolée à refroidir circule verticalement à l'intérieur des tubes 10 à partir du collecteur 30, tandis que de l'air est insufflé dans les intercalaires 20 dans une direction perpendiculaire au plan de la figure 1. L'échange de chaleur entre l'eau et l'air est réalisé par l'intermédiaire des intercalaires 20 et les parois des grandes faces 12 des tubes 10.

Comme cela a été mentionné plus haut, les tubes 10 et les intercalaires 20 sont constitués d'un matériau d'âme en alliage d'aluminium, recouvert aux fins de brasage d'un matériau d'apport également en alliage d'aluminium.

De manière à dissoudre l'alumine naturelle des différentes pièces et éviter la formation d'alumine en cours de brasage, ainsi que pour favoriser l'action du matériau d'apport, on peut voir sur les figures 2 à 4 qu'une couche 40 de flux de brasage est déposée sur un côté, ici le côté externe, d'une des deux tranches 11 sur toute la longueur L des tubes 10. Bien entendu, si les intercalaires sont placés à l'intérieur des tubes, et non à l'extérieur comme sur la figure , la couche de flux de brasage est alors déposé sur le côté interne de la tranche 11 des tubes.

La couche 40 de flux de brasage peut être déposée sur la tranche 11 des tubes 10 après assemblage de l'échangeur de chaleur. Conformément à l'invention, il est déposé du flux de brasage uniquement sur uniquement un des deux petits cotés 11 du tube plat 10 ou autrement dit sur une tranche d'un tube plat.

Dans l'exemple représenté, le tube 10 est dans une orientation sensiblement verticale et il est déposé sur un des petits cotés la quantité de flux suffisante de manière à autoriser la migration du flux le long des grands cotés 12 par gravité.

Un mode de réalisation non représenté propose que le tube plat 10 soit légèrement incliné par rapport à la verticale.

Le dépôt de la couche 40 est alors effectué, soit sous forme d'un cordon continu ou discontinu au moyen d'une seringue, d'un pinceau, d'une valve de dosage, par micropulvérisation, ou par enduction au rouleau tramé ou non, soit par sérigraphie au moyen d'un masque placé sur le flanc de l'échangeur visible sur la figure 1, ce masque étant percé de fentes parallèles au niveau des tranches des tubes 10.

La couche 40 peut également être déposée sur les tubes durant le formage des tubes.

D'une manière générale, le flux de brasage utilisé est un mélange de 35 à 60% en poids de matériau de flux, 5 à 15% en poids de N méthyl 2 pyrrolidon pour assurer l'adhérence du flux aux tubes, 5 à 15% en poids de 2 butoxyéthanol pour diminuer la cinétique de sédimentation du flux permettant d'obtenir une bonne fiabilité et une bonne reproductibilité du procédé, et 15 à 50% d'eau déminéralisée. Ces exemples de proportions n'ont aucun caractère limitatif.

En particulier, le demandeur a réalisé des essais avec un flux de brasage composé de 45% de flux Nocolok 100 (marque déposée), 10% de N méthyl 2 pyrrolidon, 10% de 2 butoxyéthanol et 35% d'eau déminéralisée. Ces exemples de proportions n'ont aucun caractère limitatif.

Plus la hauteur H du tube 10 est grande et plus la densité Y à déposer sur une largeur A de tranche 11 doit être grande afin que le flux en fondant puisse recouvrir la totalité des grandes faces 12 des tubes.

La densité Y de flux à déposer peut être déterminée de la manière suivante.

Si D est la densité moyenne de flux sur la surface d'échange des tubes, la masse de flux à utiliser pour un tube est donnée par :

$$X = 2.D.L.H$$

Avantageusement, D vaut de 0,5 à 8 g/m$^2$. En prenant D = 3 g/m$^2$, L = 200 mm et H = 30 mm, on obtient X = 0,036 g.

La densité Y cherchée est :

$$Y = X/(A.L)$$

soit Y = 180 g/m$^2$ avec A = 1 mm.

## Revendications

1. Procédé de brasage de tubes plats (10), les tubes plats (10) comportant deux grands côtés (12) et deux petits côtés (11), **caractérisé en ce que** ledit procédé comprend une opération consistant à déposer une couche (40) de flux de brasage uniquement sur un des deux petits côtés (11) desdits tubes plats (10), lesdits tubes (10) plats étant brasés avec des intercalaires (20) et le brasage étant effectué alors que l'on a déposé le flux uniquement sur un des petits côtés, le procédé comprenant une étape de montée en température dans un four CAB lors de laquelle le flux de brasage fond et se répand par gravité sur les grands côtés (12) des tubes et ainsi dans les zones de contact avec les intercalaires.

2. Procédé selon la revendication 1, dans lequel ladite couche (40) de flux de brasage est déposée sur le côté externe de la tranche (11) des tubes plats, lesdits intercalaires (20) étant disposés à l'extérieur desdits tubes.

3. Procédé selon la revendication 1, dans lequel ladite couche de flux de brasage est déposée sur le côté interne de la tranche des tubes plats, lesdits intercalaires étant disposés à l'intérieur desdits tubes.

4. Procédé selon l'une des revendications 2 ou 3, dans lequel ladite couche (40) de flux de brasage est déposée au cours du formage desdits tubes (10).

5. Procédé selon la revendication 2 ou 3, dans lequel ladite couche (40) de flux de brasage est déposée après assemblage de l'échangeur de chaleur.

6. Procédé selon l'une quelconque des revendications 1 à 5, dans lequel ladite couche (40) de flux de brasage est déposée sur lesdits tubes (10) sous forme d'un cordon continu ou discontinu.

7. Procédé selon la revendication 6, dans lequel ledit dépôt est réalisé au moyen d'une seringue, d'une valve de dosage, d'un rouleau tramé ou non, d'un pinceau, par micropulvérisation.

8. Procédé selon l'une quelconque des revendications 1 à 5, dans lequel ladite couche (40) de flux de brasage est déposée sur lesdits tubes (10) par sérigraphie.

9. Procédé selon l'une quelconque des revendications 1 à 8, dans lequel la densité moyenne (D) de flux sur la surface d'échange du tubes vaut entre 0,5 et 8 g/m$^2$.

**Patentansprüche**

1. Verfahren zum Löten von Flachrohren (10), wobei die Flachrohre (10) zwei Breitseiten (12) und zwei Schmalseiten (11) aufweisen, **dadurch gekennzeichnet, dass** das Verfahren einen Vorgang umfasst, der darin besteht, eine Hartlötflussmittelschicht (40) nur auf eine der beiden Schmalseiten (11) der Flachrohre (10) aufzubringen, wobei die Flachrohre (10) mit Zwischenlagen (20) hartgelötet werden und das Hartlöten durchgeführt wird, nachdem das Flussmittel nur auf eine der Schmalseiten aufgebracht worden ist, wobei das Verfahren einen Schritt der Erwärmung in einem CAB-Ofen umfasst, bei dem das Hartlötflussmittel schmilzt und sich durch Schwerkraft über die Breitseiten (12) der Rohre und somit in die Kontaktzonen mit den Zwischenlagen verteilt.

2. Verfahren nach Anspruch 1, wobei die Hartlötflussmittelschicht (40) auf der Außenseite des Rands (11) der Flachrohre aufgebracht wird, wobei die Zwischenlagen (20) außerhalb der Rohre angeordnet werden.

3. Verfahren nach Anspruch 1, wobei die Hartlötflussmittelschicht auf der Innenseite des Rands der Flachrohre aufgebracht wird, wobei die Zwischenlagen innerhalb der Rohre angeordnet werden.

4. Verfahren nach Anspruch 2 oder 3, wobei die Hartlötflussmittelschicht (40) während des Formens der Rohre (10) aufgebracht wird.

5. Verfahren nach Anspruch 2 oder 3, wobei die Hartlötflussmittelschicht (40) nach dem Montieren des Wärmetauschers aufgebracht wird.

6. Verfahren nach einem der Ansprüche 1 bis 5, wobei die Hartlötflussmittelschicht (40) in Form einer durchgehenden oder unterbrochenen Raupe auf die Rohre (10) aufgebracht wird.

7. Verfahren nach Anspruch 6, wobei das Aufbringen mittels einer Spritze, einem Dosierventil, einer strukturierten oder nicht strukturierten Walze, einer Bürste oder durch Mikrosprühen durchgeführt wird.

8. Verfahren nach einem der Ansprüche 1 bis 5, wobei die Hartlötflussmittelschicht (40) durch Siebdruck auf die Rohre (10) aufgebracht wird.

9. Verfahren nach einem der Ansprüche 1 bis 8, wobei die mittlere Flussmitteldichte (D) auf der Austauschfläche der Rohre zwischen 0,5 und 8 g/m$^2$ beträgt.

**Claims**

1. Process for brazing flat tubes (10), the flat tubes (10) comprising two large sides (12) and two short sides (11), **characterized in that** said process includes an operation consisting in depositing a layer (40) of brazing flux solely on one of the two short sides (11) of said flat tubes (10), said flat tubes (10) being brazed with fins (20) and the brazing being carried out when the flux has been deposited only on one of the short sides, the process comprising a step of heating in a CAB oven, in which step the brazing flux melts and spreads by gravity over the large sides (12) of the tubes and thus into the zones of contact with the inserts.

2. Process according to Claim 1, in which said layer (40) of brazing flux is deposited on the external side of the edge (11) of the flat tubes, said fins (20) being placed on the outside of said tubes (10).

3. Process according to Claim 1, in which said layer of brazing flux is deposited on the internal side of the edge of the flat tubes, said fins being placed on the inside of said tubes.

4. Process according to either of Claims 2 and 3, in which said layer (40) of brazing flux is deposited while said tubes (10) are being formed.

5. Process according to Claim 2 or 3, in which said layer (40) of brazing flux is deposited after the heat exchanger has been assembled.

6. Process according to any one of Claims 1 to 5, in which said layer (40) of brazing flux is deposited on said tubes (10) in the form of a continuous or discontinuous bead.

7. Process according to Claim 6, in which said deposition is carried out by means of a syringe, a metering valve, a patterned or unpatterned roller or a brush, or by microspraying.

8. Process according to any one of Claims 1 to 5, in which said layer (40) of brazing flux is deposited on said tubes (10) by screen printing.

9. Process according to any one of Claims 1 to 8, in which the average density (D) of flux on the exchange surface of the tubes is between 0.5 and 8 g/m$^2$.

Fig. 1

Fig. 2

Fig. 3

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5544698 A
- JP 2000061629 B
- GB 2334531 A
- JP 2004025297 B